# EUROPEAN PATENT SPECIFICATION

(11) **EP 1 124 409 B1**
(45) Date of publication and mention of the grant of the patent: **07.01.2009**
(21) Application number: 99935595.1
(22) Date of filing: 12.07.1999
(51) Int. Cl.: A01G 7/00, A01G 9/14

(54) **COVERING OF HOTBEDS AND GREENHOUSES**
ANDECKUNG VON FRÜHBEETEN UND GEWÄCHSHÄUSERN
RECOUVREMENT DES COUCHES CHAUDES ET DES SERRES

(30) Priority: 26.10.1998 US 178542
(43) Date of publication of application: 22.08.2001
(73) Proprietor: General Phosphorix LLC, Ardsley, NY 10502 (US)
(72) Inventor: GOLDBURT, E., Tim, Chappaqua, NY 10514 (US); BOLCHOUKHINE, Vladimire A., Fryazino, Moscow Region, 141120 (RU); LEVONOVITCH, Boris N., Fryazino, Moscow Region, 141120 (RU); SOCHTINE, Naoum P., Fryazino, Moscow Region, 141120 (RU); SICIGNANO, Albert, Mt. Kisco, NY 10549 (US); SANDY, Matt, Maryknoll, NY 10545 (US); GUNDLACH, Peter, von, Bisbee, AZ 85603 (US)
(74) Representative: Jones, Graham Henry
(86) International application number: PCT/US1999/016036
(87) International publication number: WO 2000/024243

(56) References cited:
- EP-A- 1 035 160
- US-A- 3 043 709
- US-A- 3 542 710
- US-A- 4 481 254
- US-A- 4 622 950
- US-A- 4 895 904
- US-A- 5 710 197
- US-A- 5 815 991

## Description

### Field of the Invention

The present invention relates to a film and a structure used in temporary or permanent agricultural constructions, for example for covering hotbeds, and greenhouses.

### Description of the Prior Art

The agricultural plastic sheeting or films have specific technical properties designed for various growing conditions and are used for cladding greenhouses, hotbeds, tunnels, soil-mulching, etc. These plastic materials are made from high and low pressure polyethylene and polyvinyl chloride resins and manufactured as 20 to 300 µm thick films by numerous companies. Such films in quantities of thousands of tons are used to cover agricultural plants in trenches, to protect seeding in hotbeds to cultivate crops and flowers in greenhouses and to perform experiments in greenhouses. Recovering of said constructions with the film materials allows one to adapt temporary covered-soil constructions for different crops every season-if needed-thus controlling both gaseous exchange in plants and illumination conditions with substantial economic savings. Furthermore, the polymeric covering material is three to four times cheaper than silicate glass.

One can incorporate into the polyethylene films UV or light stabilizers to expand the service life of these films, as disclosed in U.S. patent No. 4,895,904. One can also add anti-misting additives in order to prevent plant foliage and fruit scorching, which occurs from the condensation of water droplets. These additives also improve the quality of the crops. Other additives are designed to provide internal temperature variations in the greenhouses beneficial for a particular growth season effecting the yield of the crops.

In recent years, organic additives were used to yield colored films. The pigments and polychromatic additives based on these materials exhibit color when exposed to solar light or ultra-violet radiation. The rationale for incorporating these types of additives is that it allows a more efficient use of solar radiation since the coloration of the film corresponds to the photosynthetic active radiation (PAR)-the solar light fraction useful in producing plant growth.

It is well known that plants through their development stages react differently to the intensity and wavelength of the light. The band of 400 to 700 nm represents the PAR (Biophysical Ecology, D.M. Gates, Springer Verlag, N.Y. 1980). The absorption of the PAR radiation depends on absorbing species such as chlorophyll, carotene, etc., which have characteristic absorption wavelengths in that region. The plant's photosynthetic activity responds to specific wavelengths of the light (as disclosed in "Effect of Spectra Quality of Composite Lights", K. Inada, Japan Tour Crop Sci 49, 34-41, 1960). In recent years there has been particular interest in the active photosynthetic radiation over the range of 450 to 600 nm for the control of morphogenic, physiological and molecular development with regard to productivity of plant crops such as flowering, growth, yield and quality of produce. Additional development of plastic materials using photosensitive additives was reported for the selective application of PAR, increasing the intensity of reproduction processes in green plants through generation of additional red-orange light.

The action mechanism of such polymeric materials with additives involves biophysical phenomenon of acceleration of photosynthesis in the chlorophyll pigment through increased absorption of red or orange light that results in additional absorption of carbonic acid from air, synthesis of carbohydrate, and release of oxygen. Red-orange light complementary to sunlight is excited in the additive under the action of ultraviolet rays (UV) a fraction of which in sunlight is 3-6%-it is believed that solar UV radiation is not absorbed by green plants. To transform unused UV solar energy into red-orange light useful for plants, it was suggested to add complex organic additives such as adonifen or europium phenanthrolinate, the photo-transforming materials, with a concentration of 0.05-1 % in the film polymeric material. By using these photo-transforming additives, the yield of different crops was increased - through so-called photo-reproduction effect, as it was observed previously in temporary or permanent greenhouses when red light-emitting fluorescent lamps were used.

However, observations for a number of years showed numerous drawbacks of the known polymeric photo-transforming material.
- A photo-transforming effect lasted no more than 1-3 weeks;
- Non-reproducibility of the photo-reproduction effect for plants of different kinds and groups, e.g. increase in lettuce crop was not repeated for tomato or carrot crops, etc.;
- high cost of the film material because of extremely high cost of the organic photo-transforming additive;
- low stability in different climactic zones and low mechanical strength of the polymeric material (trade-mark "Polysvetan"), resulting in fast degradation and destruction of the material during several weeks;
- high toxicity and environmental hazard associated with using the polymeric material containing these additives.

The use of photo-transforming organic additives thus resulted in inferior mechanical and life properties of the plastic films with poor durability and maintenance due to the premature degradation.

Another noticeable effort in the field of photo-transforming additives by a group from the Applied Chemistry Center (ACC) at Saltitlo, Coahuila, Mexico, obtained a Mexican patent No. 9,600,095 for a greenhouse film that makes the PAR more effective and thereby gives an increase in crop yield and quality-specifically, in lettuce. In a subsequent paper by Lozano et al, a 40% improvement yield of the lettuce crop was reported. Here, again, several shortcomings of the so-called polychromatic additive plastic films developed by the ACC group were reported. In our opinion, the following shortcomings prevent their films from practical applications in the US:
- The concentration of additives is too high, significantly increasing the costs.
- The mechanical strength reported was reduced and in many cases was less than in the control film.
- The films exhibited an early aging in less than a year of service.
- Optical properties of these photo-transforming films were not studied therefore preventing optimization of the transmitted light spectrum.

Meanwhile, the essential drawbacks of the first-generation covering photo-transforming materials stimulated the development of a new material in which the organic complex photo-transforming additive was fully or partially substituted by inorganic photo-transforming materials based on rare earth oxysulfides or other oxyanionic materials. In accordance with the Russian patent no. 2,059,999, 0.01-0.5 weight percent inorganic photo-transforming material was added to the plastic resin. After fabrication of sheeting, it was uniformly distributed in the plastic film. This sheeting generated additional red-orange light useful for growth of the vegetables, fruits, crops, flowers, tree cuttings and saplings, and other green plants. This plastic film-trade name "Redlight"-was widely used in Russia and contiguous countries from 1994 to 1998. At present, this plastic film represents a modern technological level of practical polymeric sheeting for agricultural applications mentioned above. The following positive features of "Redlight" polymer sheeting:
- reasonably high brightness of red-orange emission,
- steady increase in yield of crops transplanted in covered soil,
- ecological safety and stability in different climactic zones,
- moderate increase in the cost of the polymer sheeting,
do not eliminate a substantial drawback of the material: a significant rapid decrease of its physical and mechanical parameters within one summer season. For instance, the tensile strength of 6-mil-1 50 micron-thick sheeting decreased from 200 kg/cm² initially to 60 to 80 kg/cm² in two months only. Such lowering of the tensile strength resulted in fully destroyed, non-functional sheeting. One needs to re-cover greenhouses and hothouses with "Redlight" sheeting several times-up to three-during the agricultural season thereby increasing the costs to unpractical levels. Until now, numerous unsuccessful attempts to pinpoint the main reasons and eliminate the dramatic lowering of physical-mechanical properties of the covering film with inorganic photo-transforming additives were undertaken causing a decrease in the consumption of the "Redlight" sheeting. The issues of the films durability and maintenance that translate into the film's lifetime and practical cost have to be qualitatively resolved in order to make the film's applications practical.

A light converting material is known from EP-A-1 035 160 comprising a photo-transforming additive based on yttrium oxisulfite and a polymer resin.

### Summary of the Invention

Accordingly, it is object of the invention is to provide a new composition for polymer sheeting that will enhance the sheeting's physical and chemical properties, allowing for excellent durability and high-maintenance, as well as photo-transforming properties. The longevity of the photo-transforming properties allows the photo-reproduction effects leading to increased crop yields over a period of at least two years.

Another object of the invention is to incorporate this new composition in polymer sheeting so that the sheeting can be used over extended periods of time, without having to replace the sheeting, so that it can have photo-transforming properties of the sheeting lasting over at least two years, and it accelerates ripening period of crops over at least two years.

It is also another object of the invention is to provide a new composition for polymer sheeting that increases harvest by at least 10% or more for strawberries, cucumbers, red peppers and tomatoes over at least two years, allows roses to bloom 30 days earlier over at least two years, reduces crop sunburns over at least two years, increases vitamin content in fruits over at least two years.

It is also an object of the invention is to provide a new composition for polymer sheeting that increases temperature by 9 to 15 degrees Fahrenheit over at least two years, and provides frost protection to 18 degrees Fahrenheit over at least two years.

A further object of the invention is to provide a new composition for polymer sheeting fabrication that will not have a significant effect on the cost of manufacturing the polyethylene film.

In keeping with these objects and with others, one feature of the present invention resides in a doped polymer sheeting for covering hotbeds and greenhouses comprising a photo-transforming additive based on yttrium-europium oxysulfide, a light-stabilizing agent, and a polymer resin used to form high-density polymeric film.

In accordance with another embodiment of the invention, a method of preparation of doped polymer sheeting is proposed comprising the steps of: forming a master batch of yttrium-europium oxysulfide, light-stabilizing agent, and polyethylene with the concentration of additives 50 - 100 times higher than in the final film, and diluting this composition in polyethylene at the temperatures of 180-220 degrees C, concurrently moving a melted polyethylene within the feeding rate range of 0.5-30 kg/hr.

In accordance with a further embodiment of the present invention, a polymeric covering film for hotbeds and hothouses, comprising a thermoplastic base of a polymeric material and a light-active inorganic filler added to it, said filler being a filler selected from the group consisting of a blue emitting filler, a red-emitting filler and a mix thereof, with compounds described by formula

Y_{2-x-y}(TR_{α})ₓ(TR_{β})_{y}SiO₅

where
TR_{α}=Ce
TR_{β}=Nd and/or Tm
x=0.01-0.05
y=0.001-0.005
being used as the blue-emitting filler, and
compounds described by formula

Y_{2-p-q-s}(TR_{γ})ₚ(TR_{δ})_{q}(TR_{λ})ₛO₂S

where
TR_{γ}=Eu,
TR_{δ}=Sm and/or Pr,
TR_{λ}=Tb and/or Pr
p=0.01-0.12
q=0.001-0.05
s=0.001-0.005
being used as the red-emitting filler,
at the following proportions of said fillers in the polymeric material:
- blue-emitting filler 0.01-0.05 mass percent
- red-emitting filler 0.05-0.2 mass percent
- polymeric base the rest.

In accordance with still a further feature of present invention, a device is proposed for enhancing photosynthesis, which includes a frame having transverse lateral stabilizers made of plastic, resin pipe inserted into 90° Ts; two near-trapezoidal end-sections fabricated from plastic, resin pipe; and end-sections connected with 45° and 90° angle elbows, or a contiguously molded frame incorporating these angles, and a photo-transforming film arranged on the frame.

The novel features which are considered as characteristic for the present invention are set forth in particular in the appended claims. The invention itself, however, both as to its construction and its method of operation, together with additional objects and advantages thereof, will be best understood from the following description of specific embodiments when read in connection with the accompanying drawings.

### Brief Description of the Drawings

Figure 1 is a cross-sectional view of an inventive polymer film, with a photo-transforming additive particle and a light-stabilizing additive particle and molecules;
Figure 2 is a perspective view of a device for enhancing photosynthesis;
Figure 3 is a perspective view of growing bed with detail A-cross section of the membrane to the frame;
Figure 4 is a perspective view of details of frame and frame connectors;
Figure 5 is a perspective view of fixture;
Figure 6 is a perspective view of a device for enhancing photosynthesis five (5) foot plant growing appliance.
Figure 7 is a perspective view of a device for enhancing photosynthesis membrane shell and water bladder of a device for enhancing photosynthesis five (5) foot plant growing appliance with hinge-fastening detail.

### Best Mode of Carrying out the Invention

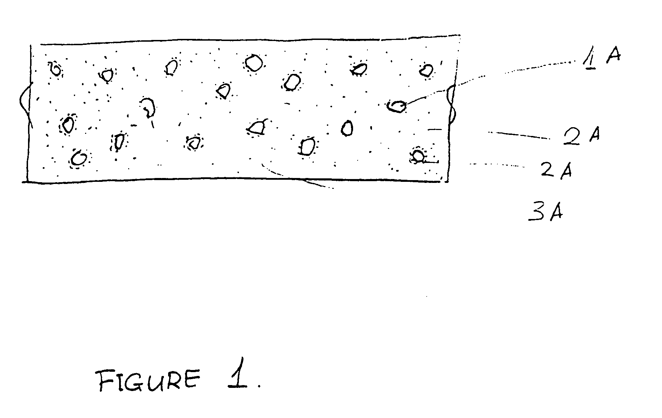

In accordance with the present invention, Figure 1 shows a perspective view of the cross-section of the polymer sheeting. The significant elements in the sheeting are the photo-transforming particle, item 1a, and the light-stabilizing additive, item 2a. The bulk of the high-density polyethylene is also shown, item 3a.

The polyethylene, which represents more than 98.5% of the polymer sheeting mass, is doped with a powder composition of inorganic photo-transforming additive (PTA) and light-stabilizing additive (LSA) powders. This composition is homogenized by thorough blending of yttrium-europium oxysulfide powder, comprised of 4 to 20 µm particles, and quaternary aminosuccinate powders. The result of the thorough mixing is illustrated in Figure 1 where the surface of the photo-transforming grains is covered with LSA material-quaternary aminosuccinates-absorbed or fixed to the surface by physical absorption forces. When the polymer mass of the high-density polyethylene is melted and reaches appropriate fluidity, the homogenized composition of PTA and LSA materials is fed through a dosing mechanism into the melt where it is spread uniformly in the polyethylene by both stirring and Stokes precipitation. It is likely that the physically absorbed quaternary aminosuccinate, which is weakly coupled with the surface of the inorganic PTA-yttrium-europium oxysulfide----is dissolved in the melted polyethylene. However, a part of the LSA material that is chemically absorbed remains on the surface of the PTA grains as illustrated in figure 1. The chemical absorption leads to effectiye micro-encapsulation of the PTA particles. This sharply improves uniformity of PTA dispersion in the bulk of the high-density polyethylene film fabricated from the above melt. In addition, thorough PTA dispersion improves the photo-transforming properties of the resultant polymer sheeting.

The mechanism proposed here is not likely to be complete and comprehensive. However, it allows one to explain an observed high ly-improved-synergetic-effect of the polymer film's physical-mechanical strength with different concentrations of additives upon continuous UV irradiation of the polymeric material (see table 1). A 200 W xenon lamp was used to simulate the artificial UV irradiation and accelerate the aging test. The maximum irradiation time was 48 hours.

**Table 1. The Tensile Strength Behavior of the Five Typical Film Composition Upon UV Irradiation.**

| Composition of polymeric cover | Concentration, Mass% | Tensile strength, kg/cm² 0 to 14 hours | Tensile strength, kg/cm² 28 hours | Tensile strength, kg/cm² 48 hours |
|---|---|---|---|---|
| HDPE + | 99.8 | 200 | 185 | 154 |
| LSA | 0.2 | | | |
| HDPE+ | 99.9 | 150 | 75 | 40 |
| PTA | 0.1 | | | |
| HDPE+ | 99.85 | 210 | 195 | 190 |
| LSA+ | 0.1 | | | |
| PTA | 0.05 | | | |
| HDPE+ | 99.75 | 222 | 202 | 195 |
| LSA+ | 0.1 | | | |
| PTA | 0.15 | | | |
| HDPE+ | 99.7 | 225 | 214 | 205 |
| LSA+ | 0.2 | | | |
| PTA | 0.1 | | | |

Table 1 lists results of the five experiments with different concentrations of additives and measured tensile strength upon exposure to the UV xenon lamp for 14, 28 and 48 hours. The first experiment was performed on the polymer film with light-stabilizing additive only. It shows a significant decrease in the tensile strength upon 48 hours exposure. The tensile strength drops from 200kg/cm² to 154 kg/cm². In the second experiment the additive used was the photo-transforming additive. The tensile strength dropped from 150 to 40 kg/cm². This result is expected because no light-stabilizing agent was used. The third, fourth and fifth experiments show tensile strength behavior as the concentration and ratio of the two additives is vaned. The best result was achieved in the fifth experiment where the tensile strength decreased only slightly after a significant exposure to UV. At the same time a significant increase in the tensile strength of the polymer film is measured as result of the synergetic behavior described above. The initial tensile strength is 225 kg/cm². It is this tensile strength result that provides the most important claim of durability and maintenance of the polymer sheeting with an appropriate PTA-LSA composition.

In terms of the method of fabrication of the HDPE film, the authors used the following approach. First, mechanical mixing of two-part light-stabilizing additive with a HDPE resin was carried out using a typical extruder provided with two schneck dose batchers and one melting chamber. The melted HDPE (PEVD 153, 15803-20, in Russian notation), at a pressure of 0.2-0.5 atmosphere (1 atmosphere ∼14 psi), passes under two dose batchers, one of which is filled with the composition of the inorganic PTA material thoroughly mixed with the organic LSA material. Once it is added, the composition is uniformly distributed in the bulk of the melted polyethylene resin. Controlling mass and relative velocity of extrusion of the melted polyethylene in relation to rate of addition of PTA in a ratio of 20 kg of melt per 300g of PTA/LSA, one can distribute these additives in the bulk of polyethylene resin with a reasonable uniformity. Thereafter, a resulting master batch, which comprises of standard-size doped-resin granules obtained after granulating process, can be used in production of PTA/LSA doped polymeric sheeting or glazing.

A second, more complicated embodiment of the invention lies in preliminary wet mixing of the two additives (organic and inorganic) and obtaining of their homogeneous blend. Alcohol compositions on the basis of a primary standard composition added with dimethyl formamtde were used as a solvent---diluent, with the concentration of quaternary aminosuccinate being in the range 5-10 %. The composition was prepared in a set up with a reverse condenser where the mass heated up to 90- 100 C was continuously stirred. Then, the prepared composition was extruded into a chamber of the main mixer through a slit batcher at a rate of 1.5-2 kg/min and a schneck screw rotation speed of 40 to 80 rpm. The obtained mass was extruded into a granulator where the main component of an intermediate process- the master batch with the concentration of the additives up to 5%-was formed.

Measuring the luminance intensity controlled the content of the inorganic additive in this master batch. The luminance intensity was correlated with the concentration of the inorganic PTA luminescent materials. The "wet" mixing process exhibited uniformity of distribution of the inorganic PTA material both in the first (50kg), and in the final fractions of the master batch at a level of plus or minus five percent. The final process of preparation of the polymer sheeting material, with the inorganic and organic additives added within the master batch, was the dry mixing of the master batch and HDPE resin in ratio of 1:45-1:55, melting the mass obtained, thorough stirring in the hot schneck batcher, and extruding at a draw-plate temperature in the range 210-220 C with a mass enter rate of 0.8-1 kg/mm and a pressure of hot air of 0.8-1 atmosphere in the sleeve.

Photo-transforming properties of the polymeric film were tested during the spring-summer season 1997 by the Botanic Garden of the Lomonosov Moscow State University, Moscow, and by private agricultural companies. The germination and yield of different crops were significantly increased by 20 to 40%. Both the agricultural botanists and horticulturists found that the new film composition has advantages in terms of mechanical strength and water resistance. Unlike the "Redlight" film, this film is rugged and will maintain its photo-transforming properties over a period of at least two years.

Thus, the composition of the polymer sheeting allows it to be used for at least two years, without having to replace the sheeting. The sheeting, therefore, has excellent durability and high-maintenance qualities, as well as long-lasting photo-transforming properties. The use of this sheeting also accelerates the ripening period, provides for a faster crop harvest and extends the growing seasons by converting the harmful UV-light into light that enhances the crop growth, yield and quality. The harvest for strawberries, cucumbers, red peppers and tomatoes is Increased by at least 50%, while the vitamin content in fruits is increased and roses bloom thirty days earlier. The composition in the film allows also for a reduction in crop sunburns, while increasing temperature by nine to fifteen degrees Fahrenheit, and it provides frost protection to eighteen degrees Fahrenheit.

Yttrium-europium, polyaminosuccinate and the high density polyethylene can be substituted by in respective order, other photo-transforming materials or phosphors, other light stabilizing materials and by low-density polyethylene, polyvinyl chloride or other inexpensive polymer precursor, resulting in synergy with the other two components, while yielding a mechanically strong polymer sheeting with the same excellent durability and maintenance, as well as photo-transforming properties. Finally, the said film is ecologically safe, non-toxic and non-flammable.

In accordance with a further embodiment of the present invention a polymeric covering film has a thermoplastic base and a light-active inorganic filler additive based on yttrium oxysulphides and silicates. The composition of the filler is described by the following formula:
for the blue-emitting filler

   Y_{2-x-y}(TR_{α})ₓ(TR_{β})_{y}SiO₅
where
TR_{α}=Ce x=0.01-0.05,
TR_{β}=Nd and/or Tm y=0.001-0.005
for the red-emitting filler

Y_{2-p-q-s}(TR_{γ})ₚ(TR_{δ})_{q}(TR_{λ})ₛO₂S

where
TR_{γ}=Eu p=0.01-0.12
TR_{δ}=Sm and/or Pr q=0.001-0.05
TR_{λ}=Tb and/or Pr s=0.001-0.005
and the proportions of the fillers in the base polymer being as follows:
- blue-emitting filler 0.01-0.05 mass percent
- red-emitting filler 0.05-0.2 mass percent
- base polymer the rest.

When excited by solar UV the proposed polymeric covering film has an intensive emission in three spectral sub-ranges: deep blue to blue, orange to red, and dark red to red and the re-emission spectrum is of a line-band character. It should be stressed once more that the re-emission spectrum of the proposed polymeric covering film is just multiline in character and occurs in three portions of the visible spectrum which is not available in all the previously proposed phototransforming films. The optical parameters of the polymeric covering films produced according to the invention are given in Table 1.

First of all, it should be noted that most of the solar UV does not pass through the 120 µm thick film (the remainder does not exceed 13-15%).

The second characteristic property of the film with the fillers is that the film when excited by artificial or natural UV has a distinct blue-purple-red emission. Quantum energy fractions in the blue, orange, and red spectral regions depend on both a ratio between two main fillers in a polymer, and their fractions by mass in a covering film. With this, it has been found that a ratio of emitted integral intensity as well as intensity of individual lines in the blue - orange - red ranges are nonlinear in intensity relative to the amount of filler added (column 6, Table 2). For example, a sharp increase of the active blue filler fraction in the polymer (example No. 5, Table 2) up to 50% is accompanied by an increase in blue-line emitted intensity at 425 nm by 20% only. The cause of the sub linear blue intensity to filler ratio is of greatest concern when the filler also contains grains of a red-emitting pigment. On the other hand, a "super linear blue" is observed very clearly.

**Table 2**

| Optical Parameters of the Polymeric Covering Films Filled with the Light- active Pigments | | | | | | |
|---|---|---|---|---|---|---|
| | Composition of active filler | Mass fraction of active filler | Intensive absorptio n of UV, nm | Main emission bands and lines, nm | Luminance in % of the standard | Lumotron -predicted stability |
| 1 | Y_{1.98}Ce_{0.02}SiO₅ | 0.1 | 290-400 | 405-470, | 160 | 880 |
| | Y_{1.94}Eu_{0.05}Sm_{0.01}O₂S | | | 570, 585, | | |
| | | | | 605, | | |
| | | | | 616,626 | | |
| | | | | 646,658 | | |
| 2 | Y_{1.98}Ce_{0.01}Nd_{0.01}SiO₅ | 0.12 | 290-400 | 410-460, | 210 | 1000 |
| | Y_{1.90}Eu_{0.07}Sm_{0.02}Tb_{0.005}Pr_{0.005}O₂S | | | 569,605, | | |
| | | | | 585,609, | | |
| | | | | 615,616 | | |
| 3 | Y_{1.95}Ce_{0.015}Tm_{0.005}SiO₅ | 0.15 | 290-400 | 405,425, | 260-270 | 1100 |
| | Y_{1.90}Eu_{0.08}Sm_{0.015}Tb_{0.005}O₂S | | | 475,605, | | |
| | | | | 570,609, | | |
| | | | | 585,615, | | |
| | | | | 626,639,658 | | |
| 4 | Y_{1.98}Cl_{0.01}Tm_{0.001}SiO₅ | 0.2 | 290-400 | 383,425, | 290 | 1100 |
| | Y_{1.92}Eu_{0.07}Sm_{0.02}Tb_{0.01}O₂S | | | 475,570, | | |
| | | | | 605,609, | | |
| | | | | 616,626, | | |
| | | | | 646,651,710 | | |
| 5 | Y_{1.98}Cl_{0.015}Tm_{0.005}SiO₅ | 0.25 | 290-400 | 405-470,475, | 150 | 1200 |
| | Y_{1.90}Eu_{0.08}Sm_{0.018}Tb_{0.001}Pr_{0.001}O₂S | | | 510,505, | | |
| | | | | 609,616, | | |
| | | | | 626,635, | | |
| | | | | 646,651, | | |
| | | | | 658,710 | | |
| 6 | Y_{1.98}Cl_{0.019}Tm_{0.001}SiO₅ | 0.16 | 290-400 | 405-470, | 240 | 1000 |
| | Y_{1.90}Eu_{0.08}Sm_{0.015}Tb_{0.005}O₂S | | | 570,616, | | |
| | | | | 651, | | |
| | | | | 585,626, | | |
| | | | | 658, | | |
| | | | | 605,635, | | |
| | | | | 710, | | |
| | | | | 610,646 | | |
| 7 | Y_{1.98}Eu_{0.1}O₂S (standard) | 0.1 | 340-400 | 585,705, | 100 | >300 |
| | | | | 616,626 | | |

By the example No3 (Table 2), a superlinear increase in luminance - more than 1.82 times against example No1 (Table 2) - is clearly seen. Explanations of the increase in luminance on the ground of the known Lambert-Beer light scattering theory have not met with success. It is probable that a complex process of repeated reabsorption by the "red" filling agent is responsible for so obvious a super linear increase.

The examples in Table 2 also point to the inter-dependence of individual lines of the polymer emission spectrum upon a specific composition of a blue- or red-emitting pigment.

The addition of yttrium-cerium orthosilicate to the film composition results in a wide band emission centered at 425 nm. With neodymium ions added to this pigment, the width of the main emission band decreases in its shorter wavelength part, but emission lines in the near-IR range manifest themselves. When a mixture of cerium ions is added to the orthosilicate composition, a spectral band with its main emission lines falling at the end of the Timiryazev deep blue to blue range centered at 475nm appears on a background on the wide spectral band centered at 425 nm. The intensity of these emission lines has a nonlinear dependence with concentrations of cerium and thulium ions added to orthosilicate. In our data, Ce:Tm ratio of 3:1 to 10:1 should be considered as optimal, whereas, the co-addition of thulium and neodymium in equal proportions does not change the relationship between the bands at 425nm and 475 nm, but sharply increases the IR emission of the covering films.

UV spectroscopy and emission of the second re-emitting filler appear much more complicated. The main drawback of Eu³⁺ as an emitter is that it has only two intense lines at 616 nm and 626 nm and that the orange line at 585 nm far is removed from them. The absorption band of β-chlorophyll is not tightly "filled" with these Eu³⁺ line emissions and an integral factor of spectral correspondence does not exceed 25 - 28%. Therefore, to obtain a higher correspondence (spectral fit), we optimized the emission spectrum (and, accordingly, the formula) of the second red-emitting filler. It was achieved by varying the concentrations of yttrium-europium oxysulphide added to the filler composition. When this is done, a nonlinear dependence of red and orange emission lines to europium concentration is also observed. If for the composition with [Eu]=0.05 atomic percent the intensity of the line at 585 nm is represented as 100% and the intensity of the line at 626 nm is 48-50% of it, then the increase of [Eu] content up to 0.07 atomic percent results in an opposite relation of the intensities of these lines. For the composition of the red-emitting pigment with [Eu] = 0.08 atomic percent, the orange line intensity is practically 1/3 of the intensity of the line at 626 nm. To eliminate a "void" between the lines at 585 nm and = 626 nm, we doped the composition of the red - emitting filler with Sm ions. With this, the line additivity, intensity, and standard position in comparison with the pigment having one activator were not observed. The addition of samarium ions makes it possible to quench Eu lines at = 585nm, but additional very intense lines at 606 nm and 665 nm manifested themselves in the material's spectrum. The use of two activators, samarium and europium allows one to solve the problem of filling the spectral range at 650nm. At this wavelength practically no intense emission lines occur in the one-activator material. Interaction between europium and samarium in yttrium oxysulphide gives an additional intense line at 705-710 nm, at which the long-wave end of β-chlorophyll absorption usually occurs.

Through multiple durability tests using a special "intense-red" criterion we selected an optimal composition of the red-emitting component (Table 3) which is in the range of Eu doped 0.08 - 0.1.

**TABLE 3**

| Optimal Composition of the Red-Emitting Component | | | | |
|---|---|---|---|---|
| Filler composition | Relative | Color | | Complex Criterion, |
| Y_{1.94}Eu_{0.05}Sm_{0.01}O₂S | 125 | 0.59 | 0.36 | 7.375 |
| Y_{1.90}Eu_{0.07}Sm_{0.02}Tb_{0.005}Pr_{0.05}O₂S | 118 | 0.62 | 0.355 | 7.32 |
| Y_{1.90}Eu_{0.08}Sm_{0.015}Tb_{0.005}O₂S | 115 | 0.635 | 0.351 | 7.36 |
| Y_{1.88}Eu_{0.1}Sm_{0.018}Tb_{0.001}Pr_{0.001}O₂S | 104 | 0.652 | 0.340 | 6.8 |
| Y_{1.84}Eu_{0.12}SM_{0.02}Pr_{0.02}O₂S | 92 | 0.659 | 0.333 | 6.1 |

The relationship between the main activators, europium and samarium, must be maintained in the range 4:1-5:1. It is very important to point to the significance of the concentration of small active dopants such as Tb and Pr. First of all, at low Tb concentrations [Tb] <0.01 an intense emission at near UV at 383nm and a blue band with a peak wavelength of 477nm are observed in the yttrium oxysulphide spectrum. An increase of Tb concentration lowers the intensity of these emission lines useful for the three-emission band film.

Praseodymium doped in "trace" concentrations does not result in emission lines in the red range but causes a significant increase in brightness of Eu's main emission, as it turned out, primarely in long-wave length ranges, which are also useful for a stable increase in plant productivity. On the basis of the data given in the invention, an optimal Pr concentration range is [Pr] =0.001 - 0.005.

The concentration of the main emitters in the inorganic red- and blue-emitting pigments is not the only factor that define key physical properties of the polymeric covering material. We discovered that material's properties, e.g. mechanical ones, are influenced by the concentration and grain shape of a filler added to the polymeric base composition. This quite uncommon experimental fact was discovered by us during production of the polymeric covering film on the basis of standard polyethylene 150-03-020 and polyethylene 159-13-02 will be described below. At first, we defined that the shape of inorganic pigment grains that caused extraordinary increases in the film tensile strength. We specifically synthesized grains of the red-emitting filling agent in the form of quasi-sphere, hexahedral pyramids, and hexa- and tetrahedral plates (the control of the blue-emitting components grain's shape is more complicated).

The pigment synthesis technique was a treatment of the yttrium - europium - samarium solid solution at T = 1,150-1,175 °C for 1 to 4 hours using complex alkali metal polysulphides. By controlling synthesis time, temperature heating rate, and final temperature, as well as the specific alkali metal, we succeeded in altering of the shape of oxysulphide pigment grains. A film was then extruded from the synthesized pigment with a constant mass ratio of polyethylene to filler. Temperatures of the extruder feeder and the edge, as well as the cooling rate with sleeve pressurization, were not constant. The test results are given in Table 4.

**TABLE 4**

| Optical-Physical and Physical-Mechanical Properties of the Covering Film Material on the Basis of the Red-Emitting Inorganic Substance | | | | |
|---|---|---|---|---|
| Grain shape | Specific surface, cm²/g | Relative emission intensity, % | Mass ratio, % | Tensile strength at rupture, % |
| Quasi-sphere or irregular shape | 2·10⁴ | 100 | 0.12 | 200 |
| Hexahedral pyramid | 4·10⁴ | 150 | 0.12 | 260 |
| Platelet shape | 6·10⁴ | 200 | 0.12 | 560 |
| Platelet shape with at high film production rate at T=190-220°C | 6.2·10⁴ | 220 | 0.12 | 600 |
| Starting polymer with no filler | ----- | ----- | 0 | 100 |

It should be noted that an additional test condition is a special polymerophillic surface treatment of the inorganic pigment grains. This treatment was not a subject of this invention, but undoubtedly played its positive role.

In tests of samples of the extruded polymeric film it was also shown that grains of inorganic filler were primarily arranged with their bases parallel to the plane of the extruded sleeve, and this seems to be a factor for the additional increase in film emission brightness and mechanical strength.

One more difficult to predict feature of the new polymeric covering films is its heat-retention property. All spectral range of solar energy passing through a covering film heat the soil in which there are seedlings or fruiting plants. A part of the solar energy is absorbed by green plants, a part is absorbed by the soil, and a part is carried-over by convective flows outside a hothouse covered with a polymeric film. If the convective part is constant, which is easy to achieve in modern skeleton hothouses, then soil temperature will be a measure of the heat-retention properties of the proposed covering films at equal values of hothouses filling.

The like experiments were conducted during preparation of the application and the test results are given in Table 5.

**TABLE 5**

| Heat-Retention Properties of the Covering Film | | | | |
|---|---|---|---|---|
| Filler composition | Film thickness, micrometers | Temperature differential compared with the control | Covering film lightly stability, % | Specific density of the additive in the film, mg/cm³ |
| 1 | 120 | 2-4 | 82 | 1.5 |
| 2 | 120 | 3-4 | 82 | 2.5-3.0 |
| 3 | 120 | 3.5-4.5 | 80 | 3.0-4.0 |
| 4 | 120 | 4-5 | 80 | 4.2-4.8 |
| 5 | 150 | 5 | 76 | 4.6-4.8 |
| 6 | 200 | 6.5 | 75 | 5.5-6.0 |

From the above data, it is seen that there is a clear relationship between the thickness of the covering film and ΔT-soil and film temperature differential-with ΔT being higher with increased film thickness. However, even a minimum film thickness, 120 µm, provides a clear increase in temperature inside a hothouse. At the same time this effect depends on a relationship between red-emitting and blue-emitting inorganic components in a polymeric covering film. With an increase of the blue-emitting component fraction ΔT also increases. This effect calls for its explanation and will be considered in the next applications.

In parallel with the above experiments dealing with difficult-to-predict and non-standard optical, physical-mechanical, and thermal effects, we conducted biological field experiments as well. The experimental procedure replicates those described many times in monographs dedicated to covered-soil cultivation; all experiments were conducted using a standard polyethylene polymeric film without additives as control. In practically all the experiments either an increase in crop yield or reduction of maturing time were found. We got a health departmental certificate for the film produced, which affirms to its high ecological and health safety for growing applications.

An optimal variant of the invention will be described hereinbelow.

In accordance with the present invention we proposed a wide spectrum of new polymeric covering materials for hothouses and hotbeds. Optimal is a binary inorganic composition of yttrium orthosilicate doped with cerium, thulium, neodymium and yttrium-europium-samarium oxysulphide doped with terbium and praseodymium. As mentioned, an optimal complex red-blue-emitting pigment content of a base polymer lies in the range 0.08-0.2%.

The polymeric material doped with the said additives efficiently absorbs natural solar UV. So, a covering film of 120microns thickness absorbs up to 84 - 86 % of the short wavelength light and, practically, all the absorption falls at absorption bands of the inorganic pigments. Re-emission occurs with a high quantum yield of 0.75-0.90. A spectral brightness of narrow emission bands of the inorganic dopants exceeds the corresponding spectral brightness of the solar spectrum in each specific range, which is a necessary condition for Timiryazev spectral effect to manifest itself. Besides, the polymeric covering film scatters or reflects inward the long wavelength IR radiation that promotes soil temperature increases in a hothouse. All the mentioned advantages of the covering film proposed are illustrated not only by the given tables (1-4), but by the examples below as well.

### Example 1.

150 kg of polyethylene marked "158-05-20 in 2 - 4 mm granules" is loaded by a pneumatic transport into a rotary drum mixer and, at the same time, 2 kg of binary inorganic filler is added, with mass ratio between the red-emitting and blue-emitting fillers being 1:3. When thoroughly mixed, the polyethylene mixture fills is poured into an extruder where a temperature of 190°C is maintained. After complete melting of the whole mixture, the pressure in the extrusion system rises and a sleeve film is produced. The production rate using a standard extruder is 2 kg/min. The film sleeve is cooled by an air flow at a rate of 3m/s and then rolled on tightened rolls.

The polyethylene covering film produced according to Example 1 has a thickness variation of 116 to 128 um and has sufficiently uniform mechanical and optimal properties.

### Example 2

2.5 kg mixture of the red- and blue-emitting fillers are charged in a secondary extruder where 40kg of polyethylene granules are melted at T = 220°C and the inorganic fillers are thoroughly mixed in the melt to prepare superconcentrate (master batch). Secondary granules are extruded under an excess pressure of 5 atms. Thereupon the covering film material is produced in a primary extruder. 150 kg of polyethylene in granules and 42.5 kg of superconcentrate are mixed. The mix is melted at 190°C and the material is produced as a continuous sleeve at a production rate of 2.5 kg/min. The sleeve is then cooled with dry air at a rate of 3 to 3.5 m/s. The film cloth is characterized by high transparency and has excellent mechanical and light transmission properties. Physical-mechanical properties are given in Table 6.

### Example 3

To obtain a polymeric film material with high UV light-resistance, one can partly use a variant described by us in the patent application, in which the inorganic pigment is further mixed with a light stabilizer of 4-aminosuccinate type at a mass ratio of 1:2. The film cloth is extruded using a previously prepared superconcentrate of a mixture of polyethylene, inorganic blue- and red-emitting fillers, and light stabilizer using ratio of 100:2:4.

Mechanical and optical properties of the polymeric material with the light stabilizer are given in Table 6.

**TABLE 6**

| Mechanical & Optical Properties of Covering Film | | | |
|---|---|---|---|
| Composition and Method of Fabrication | Polyethylene with blue and red additives (1:3 ratio). Extrusion from master batch according to example 1. | Polyethylene with blue and red additives (1:4 ratio). Extrusion from master batch according to example 2. | Polyethylene with blue and red additives (1:4 ratio) and light stabilizer from quarternary amino-succinate. Extrusion from master batch. |
| Thickness of the covering film, µ | 116-128 | 180 | 180-190 |
| Parallel tensile strength,Mp | 19 | 20.6 | 21.2 |
| Tensile strength in perpendicular direction, Mp | 18.1 | 20.0 | 20.1 |
| Relative elongation at rupture, parallel, % | 680 | 740 | 690 |
| Relative elongation at rupture, perpendicular, % | 660 | 710 | 720 |
| Transparency, % | 90% | 86% | 85 |
| Luminance at excitation wavelength, λ = 365 nm, cd/m² | 250 | 290 | 260* |

| | | | |
|---|---|---|---|
| *Mechanical strength and luminance were maintained for three seasons | | | |

In accordance with another embodiment of the present invention, the material having a composition in accordance with the invention can be used not as a continuous integral film, but as a layer produced by a particle deposition (for example aerosol spraying) and applied on a corresponding surface. For example, the material can be applied on transparent glass, plastic (polycarbonate for example) etc. covering of a greenhouse.

The material for the particle deposition can be formed as a powder in which individual particles can be composed of a polymeric core with blue and/or red phosphor of the present invention embedded in the core. The individual particles can also, to the contrary, include a core composed of blue and/or red phosphor enveloped with a polymeric microcoating.

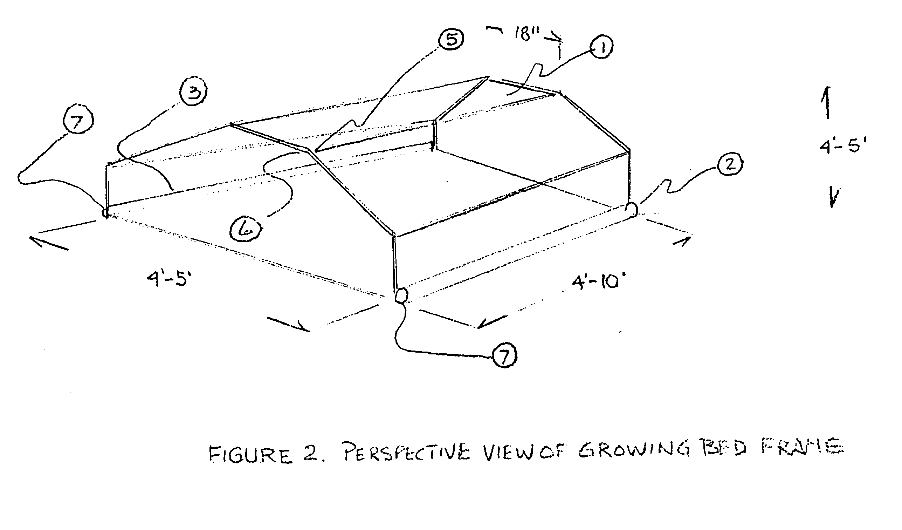

A further embodiment of the invention is shown in Figures 2-7.

Figure 2 is a perspective view and general arrangement drawing of a plant growing bed. The width is 4', the height is 4' high, and the length is 4, to 10' long. It is built of schedule 40 PVC pipe, fastened with 90°-45° Ls (figure 2, item 6), and single 90° Ts (figure 2 item 5). The purpose of the growing bed is to provide a simple to assemble, lightweight, plant growing appliance with a novel light-transforming membrane for vegetable starting beds and for tomatoes and strawberries, which can be easily managed by the average homeowner. The frame will have a luminescent coating as a safety feature so that it will be visible at night to prevent collisions and accidents (e.g tripping and falling). The membrane or film described in detail herein above contains a photo-transforming additive that enhances photosynthesis by increasing conversion of the UV light spectrum. The luminescent additive may be included in the membrane, as well as in the frame, which will provide a still higher illumination level at nighttime.

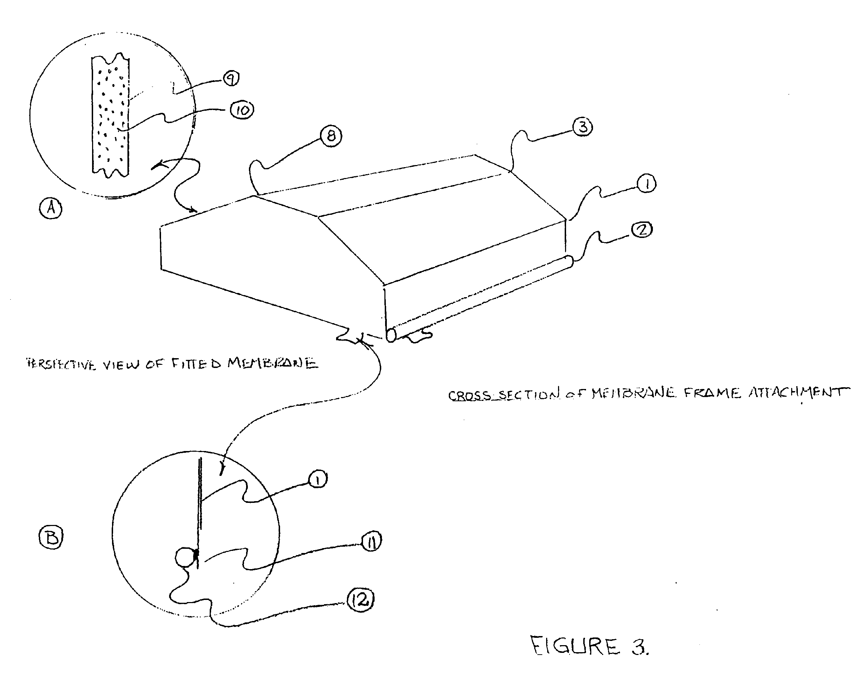

Figure 3 is a perspective view of fitted membrane which is made of 6-10 mil polyethylene plastic joined by heat-laminated seams over the previously mentioned frame1 anchored by two (2) water-filled bladders, each having a filling and sealing fixture. One such bladder is permanently affixed to the frame as a hinge and the other bladder may be fastened to the frame at will for the purpose of locking it in place. Figure 3A shows an inset which is a cross-section of the membrane with 20 µm particles of photo-transforming additive dispersed in it. The particle size of the the additive can vary from 50 A to 50 µm range and the partical size distribution of the photo-transforming additive can be wide or narrow. Figure 3B, item 11, shows the Velcro fastener and Figure 3B, item 12, shows the lateral base stabilizer, the purpose of which is to show the anchoring and fastening system for the fitted membrane.

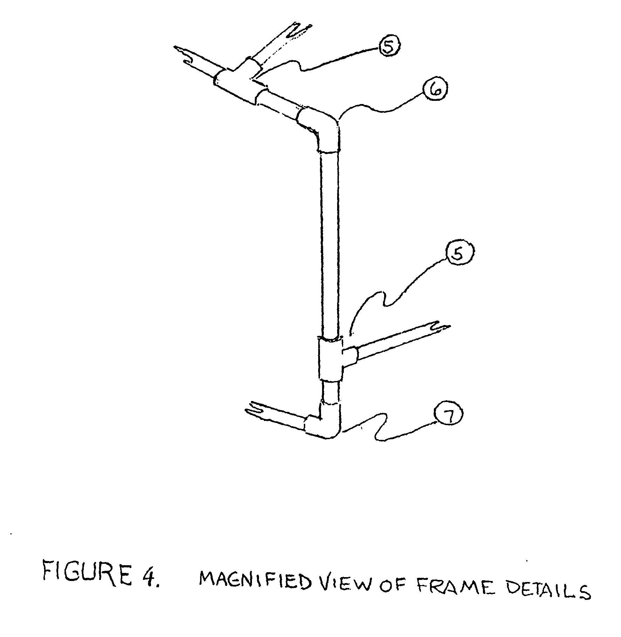

Figure 4 is a perspective view of view of frame details. Figure 4, item 5, shows the single 90°T, supporting the upper lateral frame support. Figure 4, item 6, shows a 45° L as part of the end frame structure. Figure 4, item 5, again shows a single 90° T, supporting a lower lateral frame support. Figure 4, item 7 shows the 90° L for the lower side frame corner.

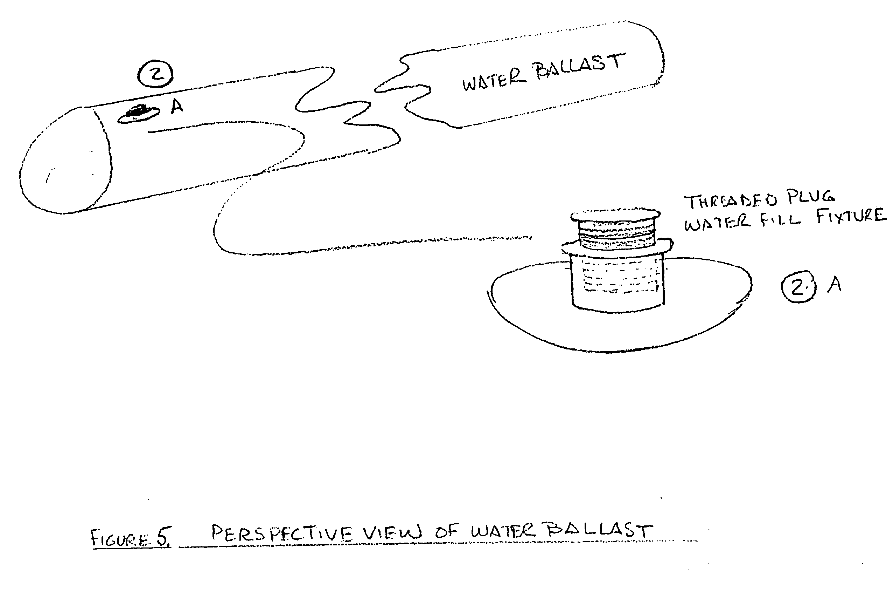

Figure 5 is a perspective view of water ballast and fill fixture. Figure 5, item 2, shows the water ballast locking bag and figure 5, item 13, shows the water ballast bag threaded plug which fits into the water ballast bag threaded filling fixture.

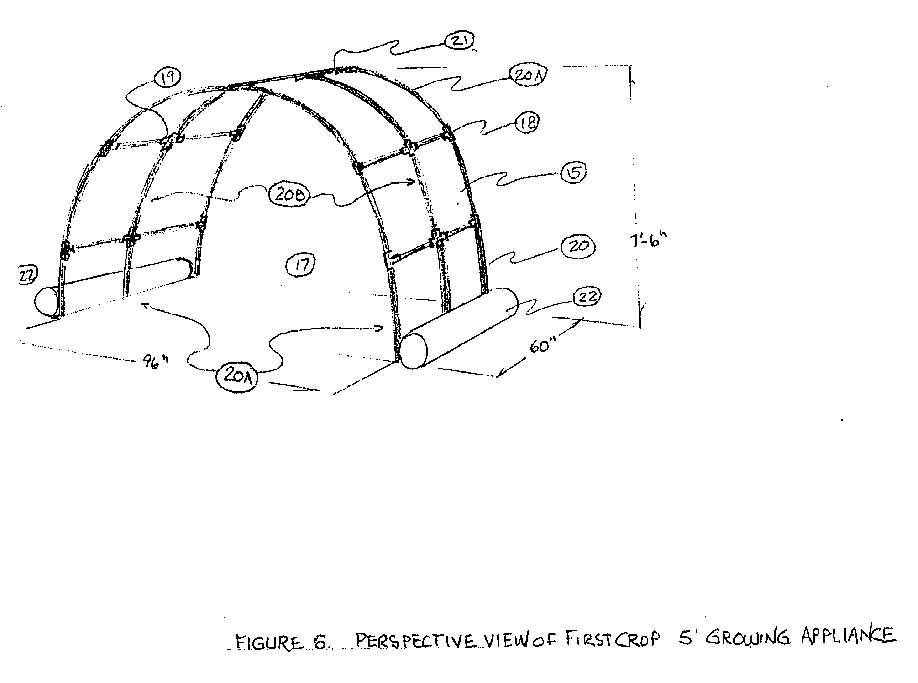

Figure 6 is a perspective view of five foot plant growing appliance The width is 8', the height is 7'6" high, and the length is 5' to 10' long. It is built of plastic, resin pipe1 fastened with single and double 90° cross-Ts (figure 6, Items 18 and 19). The purpose of the plant growing appliance is to provide a simple to assemble, lightweight, plant growing appliance with a novel light-transforming membrane for vegetables, tomatoes, and strawberries, which can be easily managed by the average homeowner. The frame will have a luminescent coating as a safety feature so that it will be visible at night to prevent collisions and accidents (e.g. tripping and falling). The membrane or film contains a phototransforming additive that enhances photosynthesis by increasing conversion of the UV light spectrum as described hereinbefore. The luminescent additive may be included in the membrane, as well as the frame, which will provide a still higher illumination level at nighttime. Figure 6, item 15, shows the membrane shell made with 6mil light transforming sheeting. Figure 6, item 16, shows the membrane end with the wind valves, the purpose of which is to relieve pressure under severe weather conditions, as well as to enclose the structure. Figure 6, item 17, shows stabilizer straps to facilitate erection and maintain the appropriate arc-radius of the appliance. Figure 6, item 20, shows the radiused 1/2" plastic, resin pipe, which is laterally stabilized by figure 5, item 21, with the 1" plastic, resin pipe. Figure 6, item 22, shows the water bladder pocket, which is used to contain removal water bladders as anchor-weight stabilizers.

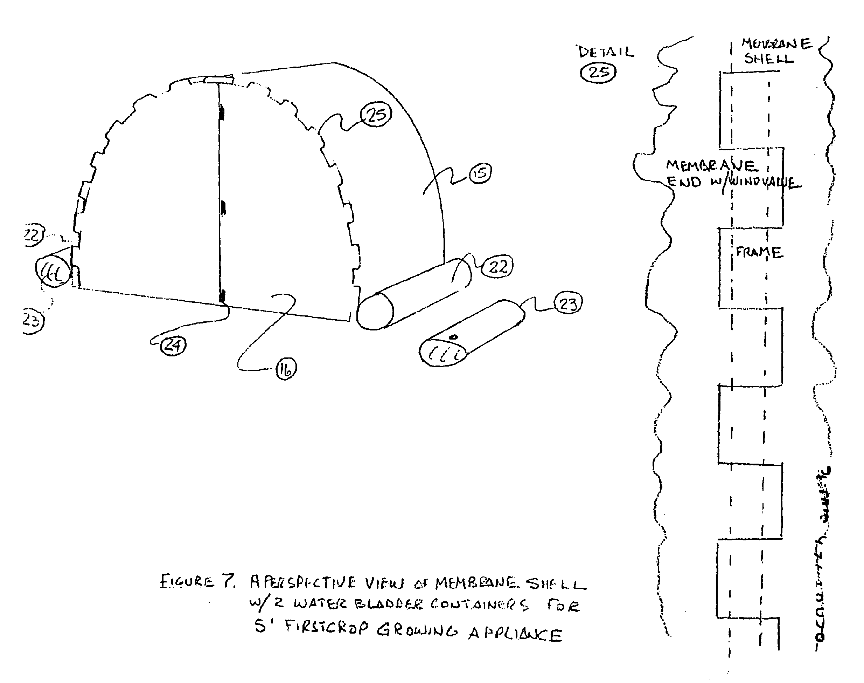

Figure 7 is a perspective view of the membrane shell and water bladder of the 5 foot plant growing appliance with hinge-fastening detail. The membrane shell, item 15, is stabilized by two water bladders, item 23, that are contained in the water bladder pocket, item 22, prior to filling with water. The water bladder pocket is an integral part of the membrane shell. The membrane shell, figure 7, items 15 and 16, is fastened to figure 6, item 20A arc support, through hinged seamed sleeve as shown in figure 7, detail Item 25. Figure 7, detail item 25, shows an interlocking hinged sleeve formed by thermo-lamination, resulting in a function similar to a hinge. The two parts of the membrane end with windvalve and hinged seamed sleeve1 item 16, are secured by Figure 7, item 24, velcro fasteners. Figure 7, item 23, is a water bladder made of 6-10 mu polyethylene membrane with heat-laminated seams, containing a threaded water-filled fixture, as per figure 4, items 13 and 14.

It will be understood that each of the elements described above, or two or more together, may also find a useful application in other types of constructions differing from the types described above.

Without further analysis, the foregoing will so fully reveal the gist of the present invention that others can, by applying current knowledge, readily adapt it for various applications without omitting features that, from the standpoint of prior art, fairly constitute essential characteristics of the generic or specific aspects of this invention.

What is claimed as new and desired to be protected by Letters Patent is set forth in the appended claims.

## Claims

1. A doped polymer film (3a) for covering hotbeds and greenhouses, comprising:
a photo-transforming additive (1a) based on yttrium-europium oxysulfide;
a light-stabilizing agent (2a);
a polymer resin used to form high-density film.

2. A doped polymer film (3a) as defined in claim 1, wherein the content of said photo-transforming additive (1a) based on yttrium-europium oxysulfide is 0.05-0.5% by weight.

3. A doped polymer film (3a) as defined in claim 1, wherein said yttrium-europium oxysulfide has particle size ranging from 4 to 20 microns and the thickness of the sheeting is 1 to 10 mil.

4. A doped polymer film (3a) as defined in claim 1, wherein said light-stabilizing agent (2a) is polyaminosuccinate and its content is 0.1-1% by weight.

5. A doped polymer film (3a) as defined in claim 2, wherein a ratio of the photo-transforming additive yttriurn-europium oxysulfide to the light stabilizing agent (2a) polyaminosuccinate is in a range of 0.5:1 to 2:1.

6. A doped polymer film (3a) as defined in claim 2, wherein said polymer resin used to form high-density polyethylene film is over 98.5% by weight with relation to the other two said components-the photo-transforming additive (1a), yttrium-europium oxysulfide, and the light-stabilizing agent (2a), polyaminosuccinate.

7. A doped polymer film as defined in claim 1, wherein it is ecologically safe, non-toxic and non-flammable.

8. A doped polymer film as defined in claim 1, including a thermoplastic base of a polymeric material and a light-active inorganic filler added to it, said filler being a filler selected from the group consisting of a blue emitting filler, a red-emitting filler and a mix thereof, with compounds described by formula
Y_{2-x-y}(TR_{α})ₓ(TR_{β})_{y}SiO₅
where
TR_{α}=Ce
TR_{β}=Nd and/or Tm
x=0.01-0.05
y=0.001-0.005
being used as the blue-emitting filler, and
compounds described by formula
Y_{2-p-q-s}(TR_{γ})ₚ(TR_{δ})_{q}(TR_{λ})ₛO₂S
where
TR_{γ}=Eu,
TR_{δ}=Sm and/or Pr,
TR_{λ}=Tb and/or Pr
p=0.01-0.12
q=0.001-0.05
s=0.001-0.005
being used as the red-emitting filler,
at the following proportions of said fillers in the polymeric material:
- blue-emitting filler 0.01-0.05 mass percent
- red-emitting filler 0.05-0.2 mass percent
- polymeric base the rest.

9. A doped polymer film (3a) as defined in claim 8, wherein a relationship between the red-and blue-emitting pigments, optimal for plants growth, is in the range 1:7-1:4 at a mass-percent content of a pigment-filler sum in the range 0.08-2.5%.

10. A doped polymer film (3a) as defined in 8, wherein the blue-red filler volume concentration is 0.5-2.5 mg/cm³.

11. A device for covering hotbeds and greenhouses, comprising a frame (1); and a doped polymer film (3a) as defined in claim 1 and arranged on said frame (1).

12. A device as defined in claim 11, wherein said frame (1) as transverse lateral stabilizers of plastic, a resin pipe inserted into 90° Ts, two mere-trapezoidal end sections of plastic, resin pipe end sections connected with 45° and 90° angle elbows, or a coniguously molded frame incorporating these angles.

13. A device as defined in claim 11, wherein said frame (1) has a luminescent coating as a safety feature.

14. A device as defined in claim 11; and further comprising valved panels which have an air-foil design and offer reduced wind-resistance.

15. A device as defined in claim 11, wherein said film is composed of 6-10 um polyethylene plastic; joined by heat-laminated seams over said frame (1) and stabilized by water-filled live tension load bladders each having a filling and sealing fixture; and a fixture permanently affixed to the frame as a hinge.

16. A device as defined in claim 11 and further comprising another fixture fastened to said frame for stabilization.

17. A doped polymer film (3a) for covering greenhouses, comprising a layer applied on a greenhouse covering by deposition of a powder of particles including the photo-transforming additive (1a), the light-stabilizing agent (2a) and the polymer resin of the film of claim 1.

18. A doped polymer film (3a) as defined in claim 1, wherein each of the particles includes one part forming a core and another part forming a microcoating, the additive forming one of the parts while the resin forms the other part.

## Patentansprüche

1. Ein dotierter Polymerfilm (3a) zum Abdecken von Treibbeeten und Gewächshäusern, aufweisend:
einen lichtumwandelnden Zusatz (1a) auf der Grundlage von Yttrium-Europium-Oxysulfid
einen lichtstabilisierenden Wirkstoff (2a)
ein Polymerharz, das benutzt wird, um einen hochdichten Film zu bilden.

2. Ein dotierter Polymerfilm (3a) wie in Anspruch 1 angegeben, worin der Inhalt besagten lichtumwandelnden Zusatzes (1a), der auf Yttrium-Europium-Oxysulfid basiert, 0,05 - 0,5% Gewichtsprozent beträgt.

3. Ein dotierter Polymerfilm (3a) wie in Anspruch 1 angegeben, worin besagtes Yttrium-Europium-Oxysulfid eine Teilchengröße, die von 4 bis 20µ reicht, hat, und die Dicke der Abdeckung 1 bis 10*10⁻³ Zoll beträgt.

4. Ein dotierter Polymerfilm (3a) wie in Anspruch 1 angegeben, worin besagte lichtstabilisierenden Wirkstoffe (2a) Polyaminosuccinat sind und sein Gehalt 0,1 - 1 Gewichtsprozent ist.

5. Ein dotierter Polymerfilm (3a) wie in Anspruch 2 angegeben, worin ein Verhältnis des lichtumwandelnden Zusatzes Yttrium-Europium-Oxysulfid zum lichtstabilisierenden Wirkstoff (2a) Polyaminosuccinat in einem Bereich von 0,5:1 bis 2:1 liegt.

6. Ein dotierter Polymerfilm (3a) wie in Anspruch 2 angegeben, worin besagtes Polymerharz, das benutzt wird, um hochdichten Polyäthylenfilm zu bilden, über 98,5 Gewichtsprozent in Beziehung auf die anderen beiden besagten Komponenten - der lichtumwandelnde Zusatz Yttrium-Europium-Oxysulfid und der lichtstabilisierende Wirkstoff Polyaminosuccinat - ist.

7. Ein dotierter Polymerfilm (3a) wie in Anspruch 1 angegeben, worin er ökologisch sicher, ungiftig und nicht entflammbar ist.

8. Ein dotierter Polymerfilm (3a) wie in Anspruch 1 angegeben, aufweisend eine thermoplastische Grundlage aus einem Polymermaterial und einen lichtaktiven anorganischen Füller, der dazu hinzugefügt ist, wobei besagter Füller ein Füller ist, der aus der Gruppe gewählt ist, die aus einem Blau aussendenden Füller, einem Rot aussendenden Füller und einer Mischung daraus besteht, mit Bestandteilen, die durch die Formel beschrieben sind
Y_{2-x-γ}(TR_{α})ₓ(TR_{β})_{γ}SiO₅
wobei
Tr_{α} = Ce
Tr_{β} = Nd und/oder Tm
x = 0,01 - 0,05
y = 0,001 - 0,005
die als der Blau aussendende Füller benutzt werden,
und Bestandteilen, die durch die Formel beschrieben sind
Y_{2-p-q-s}(TR_{γ})ₚ(TR_{δ})_{q}(TR_{λ})ₛO₂S
wobei
Tr = Eu
TR_{δ} = Sm und/oder Pr
TR_{λ} = Tb und/oder Pr
p = 0,01 - 0,12
q = 0,001 - 0,05
s = 0,001 - 0,005
die als der Rot aussendende Füller benutzt werden
mit den folgenden Verhältnissen besagter Füller in dem Polymer:
-- Blau aussendender Füller 0,01 - 0,05 Massenprozent
-- Rot aussendende Füller 0,05 - 0,2 Massenprozent
-- Polymergrundlage der Rest.

9. Ein dotierter Polymerfilm (3a) wie in Anspruch 8 angegeben, worin eine Beziehung zwischen den Rot - und den Blau aussendenden Farbstoffen, optimal für Pflanzenwuchs, im Bereich 1:7 - 1:4 liegt, bei einem Massenprozent-Inhalt einer Farbstofffüllersumme in dem Bereich 0,08 - 2,5%.

10. Ein dotierter Polymerfilm (3a) wie in Anspruch 8 angegeben, worin die Blau - Rot - Füllervolumendichte 0,5 - 2,5 mg/cm³ beträgt.

11. Eine Vorrichtung zum Abdecken von Treibbeeten und Treibhäusern, aufweisend einen Rahmen (1) und einen dotierten Polymerfilm (3a) wie in Anspruch 1 angegeben und auf besagtem Rahmen (1) angeordnet.

12. Eine Vorrichtung wie in Anspruch 11 angegeben, worin besagter Rahmen (1) querliegende seitliche Stabilisatoren aus Kunststoff, ein Harzrohr, das in 90°-Ts eingesetzt ist, zwei näherungsweise trapezoidale Endabschnitte aus Kunststoff, die Harzrohrendabschnitte mit 45°-und 90°-Winkelstücken verbunden oder ein fortlaufend gegossener Rahmen, der diese Winkel enthält, hat.

13. Eine Vorrichtung wie in Anspruch 11 angegeben, worin besagter Rahmen (1) eine leuchtende Beschichtung als Sicherheitsmaßnahme hat.

14. Eine Vorrichtung wie in Anspruch 11 angegeben, und weiter aufweisend Flügeltafeln, die eine Tragflächengestaltung haben und einen verminderten Windwiderstand bieten.

15. Eine Vorrichtung wie in Anspruch 11 angegeben, worin besagter Film aus 6 - 10µ Polyäthylenkunststoff zusammengesetzt ist, verbunden durch hitzelaminierte Säume über besagten Rahmen (1) und durch wassergefüllte frisch spannungsbeladene Blasen stabilisiert, von denen jede einen Füll - und Verschlussanschluss hat; und eine Befestigung, die dauerhaft an dem Rahmen als eine Angel befestigt ist.

16. Eine Vorrichtung wie in Anspruch 11 angegeben, und weiter aufweisend eine andere Befestigung, die an besagtem Rahmen zur Stabilisierung befestigt ist.

17. Ein dotierter Polymerfilm (3a) zum Abdecken von Treibhäusern, aufweisend eine Schicht, die auf einer Treibhausabdeckung durch Ablagerung eines Pulvers von Teilchen einschließend den lichtumwandelnden Zusatz (1a), den lichtstabilisierenden Wirkstoff (2a) und das Polymerharz des Films des Anspruchs 1, angebracht ist.

18. Ein dotierter Polymerfilm (3a) wie in Anspruch 1 angegeben, worin jedes der Teilchen einen Teil, der einen Kern, und einen anderen Teil der eine Mikrobeschichtung bildet, aufweist, wobei der Zusatz einen der Teile bildet, während das Harz den anderen Teil bildet.

## Revendications

1. Film polymère dopé (3a) pour recouvrir des couches chaudes et des serres, comprenant :
un additif photo-transformateur (1a) à base d'oxysulfure d'yttrium-europium ;
un agent photo-stabilisateur ; et
une résine polymère utilisée pour former un film de haute densité.

2. Film polymère dopé (3a) selon la revendication 1, dans lequel la teneur en ledit additif photo-transformateur (1a) à base d'oxysulfure d'yttrium-europium est de 0,05 à 0,5 % en poids.

3. Film polymère dopé (3a) selon la revendication 1, dans lequel ledit oxysulfure d'yttrium-europium a une taille particulaire dans la plage de 4 à 20 micromètres et l'épaisseur de la feuille est de 25,4 à 254 µm (1 à 10 mils).

4. Film polymère dopé (3a) selon la revendication 1, dans lequel ledit agent photo-stabilisateur (2a) est un polyaminosuccinate et sa teneur est de 0,1 à 1 % en poids.

5. Film polymère dopé (3a) selon la revendication 2, dans lequel le rapport de l'additif photo-transformateur d'oxysulfure d'yttrium-europium à l'agent photo-stabilisateur (2a) de polyaminosuccinate se situe dans la plage de 0,5:1 à 2:1.

6. Film polymère dopé (3a) selon la revendication 2, dans lequel ladite résine polymère utilisée pour former un film de polyéthylène de haute densité représente plus de 98,5 % en poids par rapport aux deux autres composants : l'additif photo-transformateur (1a) d'oxysulfure d'yttrium-europium et l'agent photo-stabilisateur (2a) de polyaminosuccinate.

7. Film polymère dopé selon la revendication 1, qui est écologiquement sûr, non toxique et ininflammable.

8. Film polymère dopé selon la revendication 1, comprenant une base thermoplastique d'un matériau polymère et une charge inorganique photo-active ajoutée à celui-ci, ladite charge étant
une charge choisie dans le groupe constitué d'une charge émettrice de bleu, d'une charge émettrice de rouge et d'un mélange de celles-ci avec des composés décrits par la formule suivante :
Y_{2-x-y}(TR_{α})ₓ(TR_{β})_{y}SiO₅
où
TR_{α} = Ce
TR_{β} = Nd et/ou Tm
X = 0,01-0,05
Y = 0,001-0,005
utilisés comme charge émettrice de bleu, et des composés décrits par la formule suivante :
Y_{2-p-q-s}(TR_{γ})ₚ(TR_{δ})_{q}(TR_{λ})ₛO₂S
où
TR_{δ} = Sm et/ou Pr,
TR_{λ} = Tb et/ou Pr
P = 0,01-0,12
Q = 0,001-0,05
S = 0,001-0,005
utilisés comme charge émettrice de rouge,
dans les proportions suivantes desdites charges dans le matériau polymère :
- charge émettrice de bleu 0,01 à 0,05 pour cent en masse
- charge émettrice de rouge 0,05-0,2 pour cent en masse
- base polymère le restant.

9. Film polymère dopé (3a) selon la revendication 8, dans lequel la relation entre les pigments émetteurs de rouge et de bleu, qui s'avère optimale pour la croissance des plantes, se situe dans la plage de 1:7 à 1:4 à une teneur en pourcentage en masse d'une somme de charges pigmentaires dans la plage de 0,08 à 2,5 %.

10. Film polymère dopé (3a) selon la revendication 8, dans lequel la concentration en volume de charge émettrice de bleu et de rouge est de 0,5 à 2,5 mg/cm³.

11. Dispositif pour recouvrir des couches chaudes et des serres, comprenant un châssis (1) et un film polymère dopé (3a) selon la revendication 1 et aménagé sur ledit châssis (1).

12. Dispositif selon la revendication 11, dans lequel ledit châssis (1) a des stabilisateurs latéraux transversaux en plastique, un tube de résine inséré dans des raccords T à 90 °, deux sections d'extrémité essentiellement trapézoïdales, des sections d'extrémité tubulaires en résine raccordées à des coudes d'angles de 45 et 90 ° ou un châssis moulé de manière contiguë et incorporant ces angles.

13. Dispositif selon la revendication 11, dans lequel ledit châssis (1) a un revêtement luminescent comme caractéristique de sécurité.

14. Dispositif selon la revendication 11 et comprenant en outre des panneaux à clapets qui ont un modèle aérodynamique et offrent une résistance réduite au vent.

15. Dispositif selon la revendication 11, dans lequel ledit film est composé de plastique de polyéthylène de 6 à 10 µm ; assemblé par des coutures laminées à chaud sur ledit châssis (1) et stabilisé par des vessies de surcharge remplies d'eau ayant chacune une garniture de remplissage et de scellage ; et une garniture fixée de manière permanente au châssis sous la forme d'une charnière.

16. Dispositif selon la revendication 11 et comprenant en outre une autre garniture fixée audit châssis pour assurer une stabilisation.

17. Film polymère dopé (3a) pour couvrir des serres, comprenant une couche appliquée sur un revêtement de serre par dépôt d'une poudre de particules comprenant l'additif de photo-transformation (1a), l'agent photo-stabilisateur (2a) et la résine polymère du film de la revendication 1.

18. Film polymère dopé (3a) selon la revendication 1, dans lequel chacune des particules comprend une partie formant un noyau et une autre partie formant un microrevêtement, l'additif formant l'une des parties tandis que la résine forme l'autre partie.
